# EUROPÄISCHE PATENTSCHRIFT

(11) **EP 1 106 051 B1**
(45) Veröffentlichungstag und Bekanntmachung des Hinweises auf die Patenterteilung: **24.01.2007**
(21) Anmeldenummer: 00126260.9
(22) Anmeldetag: 01.12.2000
(51) Int. Cl.: A01D 57/20

(54) **Mähgerät**
Mower
Faucheuse

(30) Priorität: 10.12.1999 DE 19959484
(43) Veröffentlichungstag der Anmeldung: 13.06.2001
(60) Teilanmeldung: 05107034.0
(73) Patentinhaber: DEERE & COMPANY, Moline, Illinois 61265-8098 (US)
(72) Erfinder: Franet, Roger, 57200 Sarreguemines (FR)
(74) Vertreter: Magin, Ludwig Bernhard

(56) Entgegenhaltungen:
- EP-A- 0 439 991
- EP-A- 0 882 386
- EP-A- 0 934 690
- FR-A- 2 792 163
- US-A- 2 811 003
- US-A- 4 185 445
- US-A- 5 351 468

## Beschreibung

Die Erfindung betrifft ein Mähgerät mit wenigstens zwei Mäheinheiten, wenigstens einem Schwadformer und einem fahrbaren Rahmen.

Aus der EP-A1-0 882 386 geht ein Mähgerät mit zwei Mäheinheiten hervor, die jeweils mittels eines Auslegers vertikal schwenkbar an einem Fahrgestell angebracht sind. Jeder Mäheinheit ist eine Aufbereitungseinheit nachgeschaltet, die das aufbereitete Erntegut in eine schräg zu der Fahrtrichtung verlaufende Haube fördert. Die Neigung der Haube ist so gewählt, daß ein Erntegutschwad in der Mitte zwischen beiden Mäheinheiten gebildet werden kann. Am Auswurf der Haube ist zudem ein vertikal schwenkbares Blech vorgesehen, das in den Fördergutstrom eingreifen und diesen ablenken kann. Die vertikal schwenkbare Aufhängung der Mäh- und Aufbereitungseinheiten an dem Fahrgestell macht es möglich, auf dem Feld eine große Mähbreite zu erreichen und für die Fahrt auf öffentlichen Straßen eine Transportbreite im zulässigen Rahmen zu verwirklichen.

Das der Erfindung zugrunde liegende Problem wird darin gesehen, daß bei breiten Mähwerken ein größerer seitlicher Erntegutversatz nicht möglich ist.

Dieses Problem wird auf erfinderische Weise durch die Lehre des Patentanspruchs 1 gelöst, wobei in den davon abhängigen Ansprüchen vorteilhafte Weiterentwicklungen angegeben sind.

Auf diese Weise wird der seitliche Versatz des Erntegutes auf aktive Weise mittels des Schwadformers erreicht, so daß aufgrund der eigens eingebrachten Energie das Erntegut über eine weite Strecke transportiert werden kann. Da der Schwadformer auch in eine Außerbetriebsstellung bringbar ist, kann auch pro Mäheinheit ein Schwad gebildet werden, was eine bessere Belüftung des Ernteguts erlaubt, wenn dies gewünscht ist. Bei der Mäheinheit kann es sich um ein Scheiben- oder Trommelmähwerk oder um ein sonstiges Mähwerk handeln. Der Förderer kann ein Band, Walzen, eine Schnecke oder dergleichen als Förderelement aufweisen.

Die schwenkbare Lagerung der Mäheinheit und des Schwadformers an dem Fahrgestell macht einerseits eine große Mähbreite und andererseits eine kleine Transportbreite möglich. Eine vertikale Schwenkbarkeit des Auslegers macht insbesondere dann Sinn, wenn der Schwadformer nicht so breit bzw. dann hoch ist und sich nicht unter das Mähgerät erstreckt. Eine horizontale Schwenkbarkeit läßt es zu, den Schwadformer unter einen Auslaß der Mäheinheit zu schwenken und ein langes, schlankes Fahrzeug zu bilden.

Wenn das Fahrgestell und mit ihm die Mäheinheiten und der wenigstens eine Schwadformer gegenüber dem Boden oder einer sonstigen Aufstandsfläche verstellbar ist, kann auf separate Stellmotoren pro Mäheinheit verzichtet und dennoch eine Veränderung der Stoppelhöhe erreicht werden. Mittels eines höhenverstellbaren Fahrgestells wäre es auch möglich, z. B. eine für den Anbau an eine Fronthitch vorgesehene Mäheinheit über drei Anschlußpunkte aufzunehmen.

Wenn in einem bestimmten Fall eine bestimmte räumliche Beziehung zwischen der Mäheinheit und dem Schwadformer, z. B. zur Übergabe des Ernteguts wichtig ist, kann diese Beziehung dadurch gewahrt werden, daß an der Mäheinheit und/oder an dem Schwadformer entsprechende Führungen, bis hin zu Riegeln oder dergl. vorgesehen sind.

Wenn zwischen der Mäheinheit und dem Schwadformer eine Aufbereitungseinheit vorgesehen ist, kann der Trocknungsprozeß des Ernteguts beschleunigt werden.

Die Verwendung eines planaren Förderers, insbesondere mit einem Förderband, hat den Vorteil der geringen Bauhöhe, so daß er relativ nahe über dem Boden geführt werden kann und einen großen Annahmebereich besitzt. Ein planarer Förderer kann aufgrund seines Raumbedarfs auch teilweise in den Bereich einer Abgabehaube für Erntegut eingeschoben werden.

Wenn der Förderer schräg zur Fahrtrichtung des Mähgeräts angebracht ist, kann er weiter unter die Abgabeöffnung der Mäheinheit oder der Aufbereitungseinheit geschoben werden und das Erntegut besser annehmen und dennoch ausreichend zur Seite fördern.

Wenn der Förderer in seiner Neigung zu der Fahrtrichtung verstellbar ist, kann er das Erntegut sowohl links als auch rechts abgeben und entsprechende Doppelschwade bilden.

In der Zeichnung ist ein nachfolgend näher beschriebenes Ausführungsbeispiel der Erfindung anhand eines Mähgeräts mit horizontal schwenkbaren Schwadformern dargestellt.

Die Zeichnung zeigt ein Gespann 10 bestehend aus einem Zugfahrzeug 12 mit einem Frontmähwerk 14 und einem erfindungsgemäßen Mähgerät 16.

Das Gespann 10 wird während des Betriebs über ein Feld mit zu mähendem Erntegut bewegt und weist eine Mähbreite von mehreren Metern, insbesondere bis zu neun Metern auf. Bei der Fahrt auf der Straße wird es auf eine Gesamtbreite gebracht, die von den Straßenverkehrsvorschriften erlaubt ist.

Das Zugfahrzeug 12 ist gewöhnlich ein Ackerschlepper.

Das Frontmähwerk 14 ist von herkömmlicher Bauart und ist wenigstens so breit wie das Zugfahrzeug 12, so daß während des Betriebs vor diesem ein Streifen freigeschnitten wird. Allerdings ist das Frontmähwerk 14 nur ein vorteilhafter, kein notwendiger Bestandteil; bei einer entsprechenden Ausbildung des Mähgeräts 16 kann es auch entfallen.

Das Mähgerät 16 enthält unter anderem einen Rahmen 18, zwei Mäheinheiten 20 und in diesem Ausführungsbeispiel zwei Schwadformer 22.

Der Rahmen 18 enthält ein Fahrgestell 24, eine Deichsel 26, zwei Hubarme 28, und zwei Ausleger 30.

Der Rahmen 18 bildet ein Fahrzeug, das die Mäheinheiten 20 und die Schwadformer 22 trägt.

Das Fahrgestell 24 ist gemäß der schematischen Darstellung in der Draufsicht im wesentlichen quadratisch aus Stahlrohren gebildet, an dessen vorderer Spange die Deichsel 26 angreift. An seitlichen Längsträgern sind normalerweise nicht angetriebene und nicht lenkbare Räder 32 angebracht, mit denen sich der Rahmen 18 auf dem Boden abstützt. Bei Bedarf können die Räder 32 gegenüber dem Fahrgestell 24 vertikal verstellbar angebracht sein, wozu nicht gezeigte Hydraulikzylinder verwendet werden. An den vorderen äußeren Eckbereichen ist jeweils ein Gelenk 34 mit einer horizontalen und sich in der Fahrtrichtung erstreckenden Schwenkachse und an den rückwärtigen Eckbereichen ein Gelenk 36 mit einer vertikalen Schwenkachse angebracht. In dem Fahrgestell 24 befindet sich ein Getriebe 38, in das auf bekannte aber nicht dargestellte Weise ein von dem Zugfahrzeug 12 kommender Antrieb eingeleitet und seitlich abgegeben wird. Schließlich befindet sich in der Mitte der vorderen Spange ein Lager 40 und an der rückwärtigen Spange zwei Befestigungsbolzen 42.

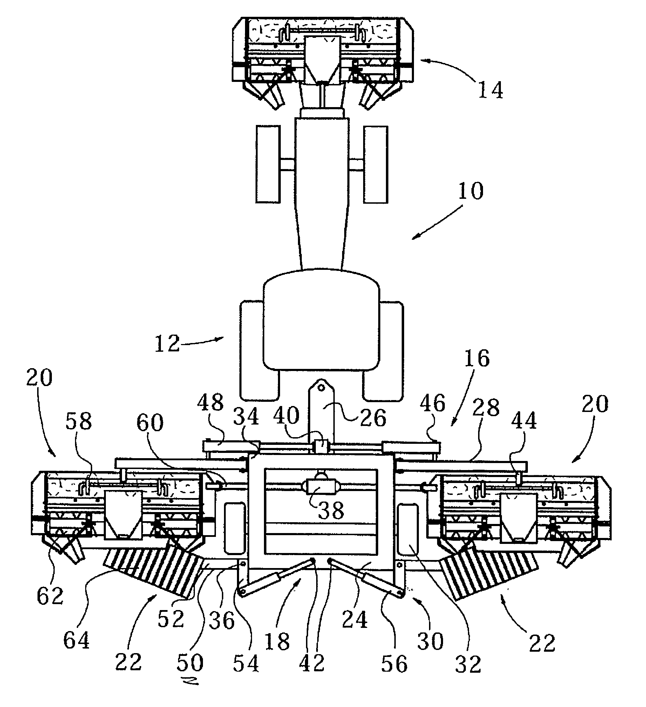

Die Deichsel 26 dient der Verbindung zwischen dem Zugfahrzeug 12 und dem Mähgerät 16 und ist horizontal schwenkbar an das Zugfahrzeug 12 angeschlossen. Bei dem Ausführungsbeispiel nach Figur 1 ist die Deichsel 26 relativ kurz ausgebildet.

Die Hubarme 28 werden jeweils mit einem inneren, d. h. der Mittenachse des Gespanns 10 zugelegenen, Endbereich in dem Gelenk 34 vertikal schwenkbar gehalten und tragen an ihrem äußeren Endbereich einen Schwenkzapfen 44. Zwischen den beiden Endbereichen ist ein Zapfen 46 vorgesehen, der sich in der Fahrtrichtung erstreckt. Eine untere im wesentlichen waagrechte Stellung dient dem Betrieb und eine obere im wesentlichen senkrechte Stellung dient dem Transport des Mähgeräts 16. Auf jeder Seite des Fahrgestells 24 ist jeweils ein Hubarm 28 vorgesehen. Zwischen dem Zapfen 46 jedes Hubarms 28 und dem Lager 40 an dem Fahrgestell 24 erstreckt sich jeweils ein Stellmotor 48, der in diesem Ausführungsbeispiel als ein Hydraulikzylinder ausgebildet ist. Ein Einfahren des Stellmotors 48 bringt die Hubarme 28 in ihre Transportstellung, ein Ausfahren in die Betriebsstellung. Anstatt von als Hydraulikzylinder ausgebildeten Stellmotoren 48 könnte auch ein Seilzug, ein Gestänge oder dergleichen verwendet werden.

Die Ausleger 30 sind ebenfalls spiegelbildlich an jeder Seite des Fahrgestells 24 vorgesehen und enthalten jeweils einen Winkelhebel 50. Ein Schenkel 52 des Winkelhebels 50 trägt einen Schwadformer 22 und ein anderer dazu senkrecht verlaufender Schenkel 54 ist mit einem Stellmotor 56 verbunden, der anderenends von dem Befestigungsbolzen 42 gehalten wird. Im Schnittpunkt beider Schenkel 52, 54 ist der Winkelhebel 50 in dem Gelenk 36 mit der vertikalen Schwenkachse aufgenommen. Ein Einfahren des Stellmotors 56 bewirkt, daß der Winkelhebel 50 eine Lage einnimmt, in der sich die Längsachse des ersten Schenkels 52 in der Fahrtrichtung erstreckt und in der sich der Schwadformer 22 nicht im Betrieb befindet. Der Winkelhebel 50 kann im wesentlichen um neunzig Grad horizontal geschwenkt werden.

Die Mäheinheiten 20 sind im wesentlichen gleich oder spiegelbildlich ausgebildet und befinden sich seitlich des Fahrgestells 24. Jede Mäheinheit 20 enthält ein Mähwerk 58, z. B. in der Art eines Scheibenmähwerks, das eine Schnittbreite von z. B. drei Metern besitzt und mittels einer Antriebswelle 60 von dem Getriebe 38 aus antreibbar ist.

In dem gezeigten Ausführungsbeispiel folgt stromabwärts auf das Mähwerk 58 eine Aufbereitungseinheit 62, z. B. in der Art eines oberschlächtig fördernden Zinkenförderers, der das gemähte Erntegut aufbereitet und dem Schwadformer 22 aufgibt.

Der Schwadformer 22 enthält einen Förderer 64, der in bekannter Weise als ein planarer Bandförderer ausgebildet ist. Der Förderer 64 erstreckt sich in der Betriebsstellung teilweise unter die Aufbereitungseinheit 62 und verläuft zu der Fahrtrichtung geneigt. Die Orientierung des Förderers 64 ist so gewählt, daß das Erntegut zur Mitte des Gespanns 10 hin gefördert wird, um dort mit dem Erntegut des gegebenenfalls vorhandenen Frontmähwerks 14 und dem der anderen Mäheinheit 20 ein großes Schwad zu bilden. Während zwei Schwadformer 22 gezeigt sind, reicht zum Erreichen der Wirkung der Erfindung bereits ein einziger Schwadformer 22 aus. Der Förderer 64 wird vorzugsweise mittels eines nicht gezeigten Hydraulikmotors angetrieben. Je nach der Ausbildung des Schwadformers 22 kann dieser wahlweise in Verbindung mit der linken oder der rechten Mäheinheit 20 verwendet werden. Die Verbindung des Schwadformers 22 mit dem Winkelhebel 50 ist in der Zeichnung nur schematisch dargestellt. In der Wirklichkeit sind entsprechende Streben, Halter und dergleichen vorgesehen.

Nach alledem ergibt sich folgende Funktion.

In der Betriebsstellung der Mäheinheiten 20 erstrecken sich die Hubarme 28 waagrecht, d. h. die Stellmotoren 48 sind ausgefahren. Wenn die Bedienungsperson wünscht, daß das Mähgut direkt in einem Schwad auf den Boden fallen soll, d. h. nicht von dem Schwadformer 22 zur Mitte hin gefördert wird, werden die Stellmotoren 56 eingefahren, wodurch die Schwadformer 22 nach hinten schwenken und das Mähgut nicht aufnehmen können. Bezieht man das Frontmähwerk 14 mit ein, ergeben sich bei einem Arbeitsgang drei Schwade hinter dem Gespann 10. Soll nur ein einziges breites Schwad gebildet werden, werden die Schwadformer 22 mittels der Stellmotoren 56 unter die Aufbereitungseinheiten 62, oder falls diese nicht vorhanden sind, unter den Abgabebereich der Mäheinheiten 20 geschwenkt. Das dann angenommene Erntegut wird mittels der Schwadformer 22 zur Mitte des Gespanns 10 gefördert und somit unmittelbar neben dem Schwad des Frontmähwerks 14 und der anderen Mäheinheit 20 abgelegt. Die Beschreibung ist so zu verstehen, daß das Erntegut der Mäheinheiten 20 nicht auf der Mitte sondern seitlich davon abgelegt wird, so daß drei Schwade mit ihren Kanten aneinander grenzen. Es wird daher lediglich in Richtung auf die Mitte hin gefördert.

Zum Einnehmen einer Transportstellung werden die Stellmotoren 56 eingefahren, so daß die Schwadformer 22 hinter das Fahrgestell 24 geschwenkt werden. Anschließend werden die Stellmotoren 48 eingefahren, so daß die Hubarme 28 und mit ihnen die Mäheinheiten 20 und evtl. die Aufbereitungseinheiten 62 angehoben werden. In diesem Zustand nimmt das Mähgerät 16 eine für die Fahrt auf öffentlichen Straße zulässige Breite ein.

## Patentansprüche

1. Mähgerät (16) mit:
a) einem Rahmen (18), der über ein Feld oder dergleichen gefahren werden kann und Hubarme (28) aufweist;
b) wenigstens zwei Mäheinheiten (20), die vertikal pendelnd an jeweils einem quer zur Fahrtrichtung verlaufenden, schwenkbaren Hubarm (28) gelagert sind;
c) wenigstens einem Schwadformer (22),
**dadurch gekennzeichnet, daß**:
d) an dem Rahmen (18) wenigstens ein Ausleger (30) angreift, der getrennt von den Hubarmen (28) geschwenkt werden kann;
e) der Schwadformer (22) einen Förderer (64) enthält und mittels des Auslegers (30) an dem Rahmen (18) zwischen einer Betriebs- und einer Außerbetriebsstellung schwenkbar angebracht ist;
f) die Mäheinheiten (20) und der wenigstens eine Schwadformer (22) jeweils eigens antreibbar sind.

2. Mähgerät nach Anspruch 1, **dadurch gekennzeichnet, daß** der Rahmen (18) seitliche Hubarme (28) bzw. Ausleger (30) und ein Fahrgestell (24) aufweist, wobei die Hubarme (28) bzw. die Ausleger (30) horizontal oder vertikal schwenkbar an dem Fahrgestell (24) angebracht sind.

3. Mähgerät nach Anspruch 2, **dadurch gekennzeichnet, daß** das Fahrgestell (24) gegenüber einer Aufstandsfläche höhenverstellbar ist.

4. Mähgerät nach einem oder mehreren der vorherigen Ansprüche, **dadurch gekennzeichnet, daß** der Mäheinheit (20) eine Aufbereitungseinheit (62) nachgeschaltet ist.

5. Mähgerät nach einem oder mehreren der vorherigen Ansprüche, **dadurch gekennzeichnet, daß** an der Mäheinheit (20) oder an der Aufbereitungseinheit (62) Führungen für die Anlage des Schwadformers (22) vorgesehen sind.

6. Mähgerät nach einem oder mehreren der vorherigen Ansprüche, **dadurch gekennzeichnet, daß** der Förderer (64) ein planares Förderband aufweist, das in der Betriebsstellung unter die Abgabeöffnung der Mäheinheit (20) oder der Aufbereitungseinheit (62) reicht.

7. Mähgerät nach einem oder mehreren der vorherigen Ansprüche, **dadurch gekennzeichnet, daß** die Förderrichtung des Förderers (64) schräg zu der Fahrtrichtung des Mähgeräts (16) verläuft.

8. Mähgerät nach einem oder mehreren der vorherigen Ansprüche, **dadurch gekennzeichnet, daß** die Stellung des Förderers (64) gegenüber der Mäheinheit (20) oder der Aufbereitungseinheit (62) veränderbar ist.

## Claims

1. A mower (16) with:
a) a frame (18) which can be driven over a field or the like and comprises lift arms (28);
b) at least two mower units (20) which are each mounted to tilt vertically on a pivoted lift arm (28) extending transverse to the direction of travel;
c) at least one swath former (22),
**characterized in that**:
d) at least one cantilever arm (30) engages on the frame (18) and can be pivoted separately from the lift arms (28);
e) the swath former (22) includes a conveyor (64) and is fitted by means of the cantilever arm (30) on the frame (18) for pivoting between a working position and a non-working position;
f) the mower units (20) and the at least one swath former (22) can each be driven on their own.

2. A mower according to claim 1, **characterized in that** the frame (18) comprises lateral lift arms (28) and cantilever arms (30) respectively and a chassis (24), wherein the lift arms (28) and the cantilever arms (30) respectively are fitted to pivot horizontally or vertically on the chassis (24).

3. A mower according to claim 2, **characterized in that** the chassis (24) is adjustable in height relative to a standing surface.

4. A mower according to one or more of the preceding claims, **characterized in that** the mower unit (20) is followed by a conditioning unit (62).

5. A mower according to one or more of the preceding claims, **characterized in that** guides for location of the swath former (22) are provided on the mower unit (20) or on the conditioning unit (62).

6. A mower according to one or more of the preceding claims, **characterized in that** the conveyor (64) comprises a flat conveyor belt which extends in the operating position below the delivery opening of the mower unit (20) or the conditioning unit (62).

7. A mower according to one or more of the preceding claims, **characterized in that** the conveyor device of the conveyor (64) runs obliquely to the direction of travel of the mower (16).

8. A mower according to one or more of the preceding claims, **characterized in that** the position of the conveyor (64) relative to the mower unit (20) or the conditioning unit (62) can be altered.

## Revendications

1. Faucheuse(16)avec:
a) un cadre (18), que l'on peut conduire sur un champ ou un endroit de ce genre et qui comporte des bras de levage (28) ;
b) au moins deux unité de fauchage (20) qui sont montées sur des paliers oscillants verticalement sur un bras de levage (28) correspondant, pivotant s'étendant perpendiculairement au sens de transport ;
c) au moins une andaineuse (22),
**caractérisée en ce que** :
d) au moins un bras en porte-à-faux (30), qui peut pivoter séparément des bras de levage (28), vient en prise dans le cadre (18) ;
e) l'andaineuse (22) comprend un transporteur (64) et **en ce qu'**elle est disposée sur le cadre (18) à l'aide du bras en porte-à-faux (30) de manière à pouvoir pivoter entre une position de fonctionnement et une position de mise hors service ;
f) les unités de fauchage (20) et la ou les andaineuses (22) peuvent être entraînées chacune de manière autonome.

2. Faucheuse selon la revendication 1, **caractérisée en ce que** le cadre (18) comprend des bras de levage latéraux (28) ou des bras en porte-à-faux (30) et un châssis (24), les bras de levage (28) ou les bras en porte-à-faux (30) étant disposés de manière à pouvoir pivoter horizontalement ou verticalement sur le châssis (24).

3. Faucheuse selon la revendication 2, **caractérisée en ce que** le châssis (24) est réglable en hauteur par rapport à une surface de contact au sol.

4. Faucheuse selon une ou plusieurs des revendications précédentes, **caractérisée en ce que** l'unité de fauchage (20) est montée en aval d'une unité de conditionnement (62).

5. Faucheuse selon une ou plusieurs des revendications précédentes, **caractérisée en ce qu'**il est prévu des guidages sur l'unité de fauchage (20) ou sur l'unité de conditionnement (62) pour l'appui de l'andaineuse (22).

6. Faucheuse selon une ou plusieurs des revendications précédentes, **caractérisée en ce que** le transporteur (64) comprend une bande transporteuse plane qui, dans la position de fonctionnement, s'étend jusqu'en dessous de l'ouverture de déchargement de l'unité de fauchage (20) ou de l'unité de conditionnement (62).

7. Faucheuse selon une ou plusieurs des revendications précédentes, **caractérisée en ce que** le sens de transport du transporteur (64) s'étend en biais par rapport au sens de déplacement de la faucheuse (16).

8. Faucheuse selon une ou plusieurs des revendications précédentes, **caractérisée en ce que** la position du transporteur (64) est variable par rapport à l'unité de fauchage (20) ou à l'unité de conditionnement (62).
